# EUROPEAN PATENT SPECIFICATION

(11) **EP 0 518 500 B1**
(45) Date of publication and mention of the grant of the patent: **18.08.1999**
(21) Application number: 92304486.1
(22) Date of filing: 18.05.1992
(51) Int. Cl.: H04N 5/265, H04N 5/262, G11B 27/031

(54) **Video mixers**
Videomischer
Mélangeurs de vidéo

(30) Priority: 14.06.1991 US 715332
(43) Date of publication of application: 16.12.1992
(73) Proprietor: SONY ELECTRONICS INC. (a Delaware corporation), Park Ridge, New Jersey 07656 (US)
(72) Inventor: Herz, William, Newark, California 94560 (US)
(74) Representative: Cotter, Ivan John

(56) References cited:
- EP-A- 0 387 981
- GB-A- 1 547 620
- JEE JOURNAL OF ELECTRONIC ENGINEERING, vol.27, 1990, TOKYO JP pages 76 - 79 SOHTOME 'Recording System Integrates Digital Mixer and Recorder'
- JEE JOURNAL OF ELECTRONIC ENGINEERING, vol.28, 1991, TOKYO JP pages 38 - 42 FUJINO ET AL. 'Digital Mixing Console Meets Professional Mixing Needs'
- Television Engineering Handbook, K. Blair Benson, pp. 14.58-14.83

## Description

This invention relates to video mixers, also known as video switchers or video edit gear.

With the advent of video technology in image recording, it has become more and more common to use a video mixer for editing video tapes. Video tapes offer many attractive features. In video recording there are no foot cuts and no rolls of film to unravel and no footage is lost. A first cut in video, or any other screening, can be easily saved and reshown at any time. Complicated video effects can also be accomplished off-line that would look as real and immediate as if they were done on-line. Finally, aside from any delay due to editorial decisions, videotape editing is undoubtedly much faster than film editing.

Television Engineering Handbook, K. Blair Benson, 1986, pages 14.58-14.83 discloses a video mixer and effects system having a video switching system and an external editing computer coupled to the mixer system via a serial interface system.

On page 14-78 to 14-80 Benson discusses various aspects of video mixer and effects system.

For controlling "a typical, large-size production switcher" button pushes (of a control panel) "can be encoded ... into parallel or serial data that can be sent to the switcher electronic".

A switcher may be (micro) processor-based having many microprocessors connected by an inter processor bus allowing software control of the switcher.

The interprocessor bus, also provides an excellent method for supplying remote control of the switcher. With a software-based ..system - remote control can be accomplished by providing another processor that interprets remote control information at a data port and loads it into the interprocessor bus.

Figure 14-36 on page 14.79 .. "is an example of a serial interface system that can be used to interface editors.." "Under editor control, the switcher reacts to commands ... The switcher can send handshakes, status and the contents of memory requests..." The system of Figure 14-36 comprises an editing computer coupled by a serial interface to a production switcher, an electronic still store, a character generator a digital video effects machine and other peripherals. The editing computer is connected directly to tape machines.

Also disclosed is the SMPTE standard digital control interface for linking devices such as video mixers and editing computers. The interface provides a mechanical standard for equipment connectors, a bus protocol and standard messages for control of the linked devices.

GB-A-1 547 620 discloses a digital system for synchronous data communication for use with computers, peripheral memory units, and data communications over telephone lines. It discloses an interface having a buffer for receiving input, data, a FIFO buffer for storing input data words, converting means for converting the data stored in the FIFO buffer to serial data for output, and control logic for controlling the conversion and data output.

An illustrative example of a video tape editing system can be found in the Edit Gear, XV-Z10000, manufactured by the Sony Corporation of Tokyo, Japan. With a touch of buttons on a control panel, or "switcher head", video signals can be combined, mixed, switched, overlapped, inserted, duplicated, miniaturised, interwoven, compressed, zoomed, scrolled, etc., to create a variety of special effects. Figure la of the accompanying drawings illustrates some of the functions of the XV-Z10000.

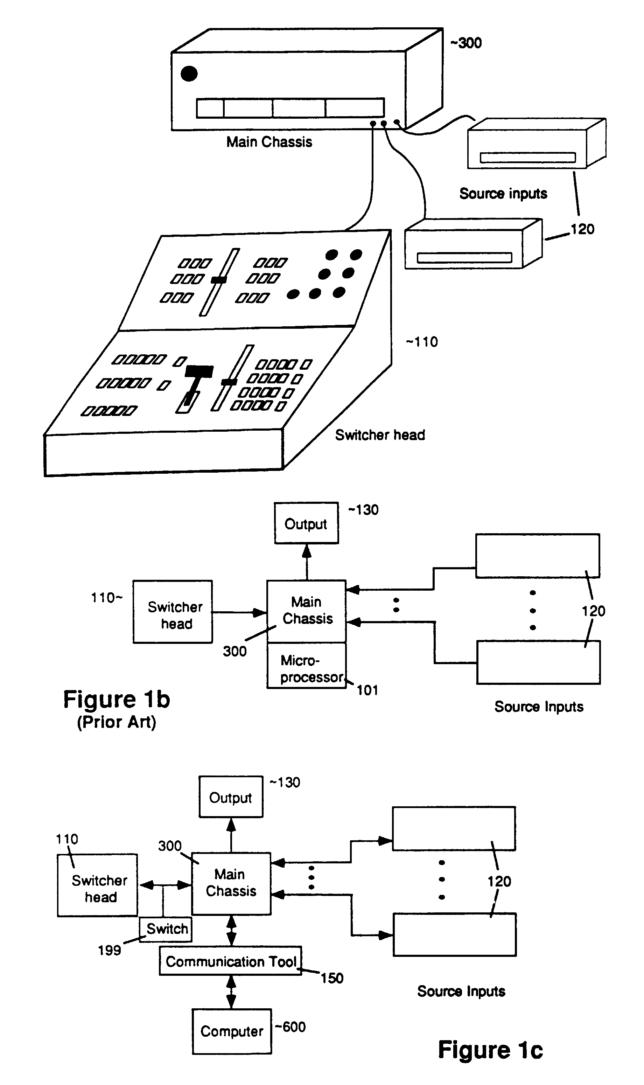

As demonstrated in Figure 1b of the accompanying drawings, the XV-Z10000 comprises two physical units: a main chassis 300 and a switcher head 110. The main chassis 300 is a control unit, to which input video signals from sources 120 are connected to be processed to provide an output video signal 130. The main chassis 300 utilises a 4-bit microcomputer 101 for processing. The switcher head 110 is a "button panel" which selects the desired effects, such as wipe pattern, luminance, chrominance, and zoom effect.

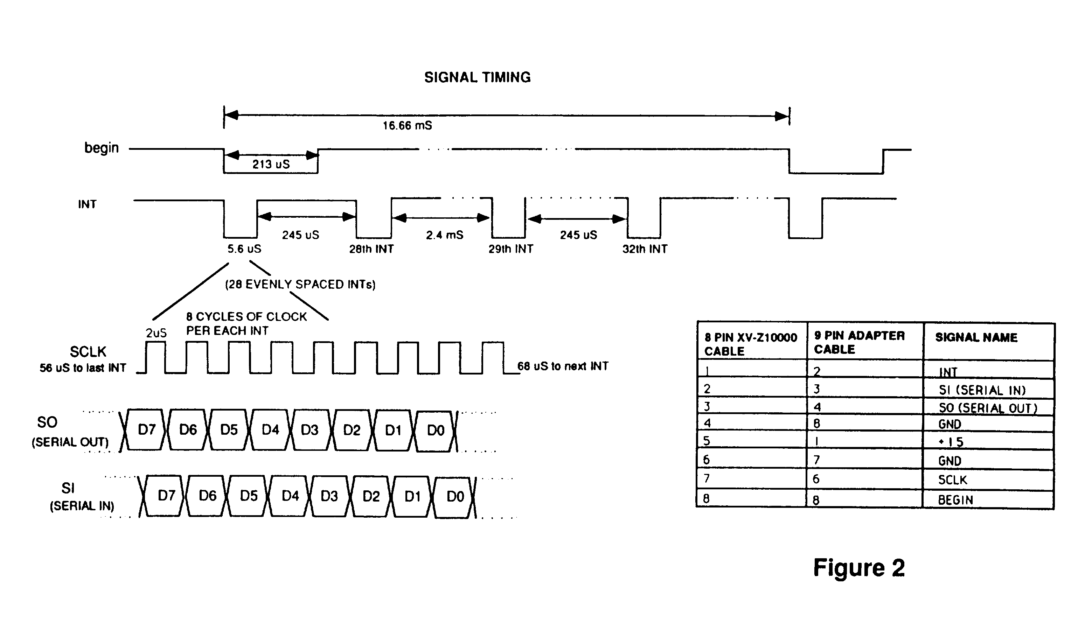

The timing scheme for the XV-Z10000 communication protocol is shown in Figure 2 of the accompanying drawings. The communication protocol between the main chassis 300 and the switcher head 110 is known as "3-point serial", comprising a BEGIN signal which indicates a frame, an INTERVAL (INT) signal which indicates a byte, and a clock (SCLK) which represents a bit. As is shown in Figure 2, there are currently 8 (bits) cycles of SCLK for each INT (byte) and 32 INTs for each BEGIN (frame).

It should be appreciated that operating the XV-Z10000 edit gear requires manual operation of key buttons, which imposes a limitation as to how many buttons, or functions, a human operator's hands can manipulate in each frame. It should also be appreciated that the human operator is required to be at the "box" to operate the XV-Z10000 because the XV-Z10000 is a stand-alone unit without any remote accessibility. Further, it should be appreciated that where an edit decision in one frame is identical to a previous frame, a human operator still has to rekey in the buttons. Worse yet, to perform an identical sequence of editing, as may occur if the editing is to be performed in a different location or at a different time, a human operator has to re-do the entire sequence with the utmost tedium. Finally, it can be appreciated that a human video editor still has to be physically at the "box" to make editing decisions, although it would be more efficient to be able to make edit decisions at a remote site. In a typical editing studio with multiple rooms and multiple edit gears, an editor thus has to go from room to room to perform edits.

According to a one aspect thereof the invention provides editing apparatus comprising: a video mixer, a plurality of video input sources coupled to said video mixer, said video mixer performing edit operations on the plurality of video input sources pursuant to edit commands received, said video mixer issuing video mixer control signals indicative of timing of signals of video input sources coupled to the video mixer; a communication means; and a computing means; the communication means coupling the computing means and the video mixer to each other; characterised by
the computing means having means for entering edit commands to be performed, means for storing entered edit commands as an output data array until the commands are to be executed, said output data array comprising a plurality of output data words defining a plurality of edit commands, and means for transmitting a frame consisting of the plurality of output data words to the communication means, when the entered edit commands are to be performed
A) the communication means comprising
   i) means for receiving said data array from said computing means and for receiving video mixer control signals from said video mixer, said control signals comprising BEGIN signals, INTERVAL signals and CLOCK signals, each of said BEGIN signals triggering a frame of output data words, each word being synchronised with one INTERVAL signal and said CLOCK signals synchronising each bit of said output data words,
   ii) means for converting each output data word of the output data array received by said receiving means into serial output data signals, one of said output data words being converted if one of said INTERVAL signals is received after one of said INTERVAL signals is synchronously received with one of said BEGIN signals, and
   iii) means for transmitting said serial output data signals to said video mixer said serial output data signals being synchronous with the rising edges of said CLOCK signals, and
B) the communication means comprising-
   iv) means for receiving serial input data signals from said video mixer, said serial input data signals being synchronous with the falling edges of said CLOCK signals,
   v) converter means for converting said input data signals into input data words, one of said input data words being generated when one of said INTERVAL signals is received after one of said INTERVAL signals is synchronously received with one of said BEGIN signals,
   vi) means for storing said input data words as an input data array; and
   vii) means for transferring said input data array from said storing means to said computing means when one of said BEGIN signals is received after one of said INTERVAL signals is synchronously received with one of said BEGIN signals.

According to another aspect thereof the invention provides a method for performing edit operations on a video mixer said video mixer performing edit operations on a plurality of video input sources coupled to said video mixer pursuant to edit commands received, said video mixer issuing video mixer control signals indicative of timing of signals of video input sources coupled to the video mixer, said method characterised by comprising the steps of:
entering through a computing means edit commands to be performed;
storing entered edit commands as an output data array until the commands are to be executed said output data array comprising a frame consisting of a plurality of output data words defining a plurality of edit commands;
when the entered edit commands are to be performed, transmitting the output data array to a communication means coupled to the video mixer and computing means;

A) the communication means -
   i) receiving said data array from said computing means and receiving video mixer control signals from said video mixer, said control signals comprising BEGIN signals, INTERVAL signals and CLOCK signals, each of said BEGIN signals triggering a frame of output data words in said video mixer, each word being synchronised with one INTERVAL signal and said CLOCK signals synchronise each bit of said output data array,
   ii) converting each output data word of the output data array received from said computing means into serial output data signals, such that one of said output data words is converted if one of said INTERVAL signals is received after one of said INTERVAL signals is synchronously received with one of said BEGIN signals, and
   iii) transmitting said serial output data signals to said video mixer said serial output data signals being synchronous with the rising edge of said CLOCK signals, and
B) the communication means-
   iv) receiving serial input data signals from said video mixer, said serial input data signals being synchronous with the falling edge of said CLOCK signals,
   v) converting said input data signals into input data words, one of said input data words being generated when one of said INTERVAL signals is received after one of said INTERVAL signals is synchronously received with one of said BEGIN signals,
   vi) storing said input data words as an input data array; and
   vii) transferring said input data array from said communication means to said computing means when one of said BEGIN signals is received after one of said INTERVAL signals is synchronously received with one of said BEGIN signals.

As will be appreciated, the invention permits edit gear like the XV-Z10000 to be automated through a computer, such as a personal computer, which emulates the microcomputer in the edit gear as well as supplements it with a much greater range of capabilities. As will be apparent from the following description, a preferred virtual control apparatus and automated video communication tool embodying the invention permit an editor to access all the functions of the video mixer in one frame. Also, the preferred embodiment permits a sequence of edit functions to be stored and downloaded at a later time or to a different video mixer. Furthermore, the invention may be configured in a multiple-video mixer system in a centralised environment whereby the editor can access a multiplicity of video mixers without physically moving to the video mixer to manually operate the switcher head.

The preferred embodiment described below: provides the capability to automate a video mixer with a computer; provides full access to all the functions of the video mixer in one frame; provides the capability to store edit sequences and edit decisions to be used at a later time, or at a different video mixer; and provides remote access to a plurality of video mixers in a centralised control environment, that is without the operator having to go from room to room. The preferred embodiment provides automated video communication and control between a video mixer and a computer.

The invention will now be further described, by way of illustrative and non-limiting example, with reference to the accompanying drawings, in which:
Figure 1a is a pictorial representation of some functions of a video mixer;
Figure 1b is a block diagram illustrating the environment of a Sony Corporation XV-Z10000 edit gear (video mixer);
Figure 1c is a block diagram illustrating the XV-Z10000's environment when incorporating an automated video communication tool or apparatus embodying the present invention;
Figure 2 illustrates a "3-point serial" communication protocol for the XV-Z10000;
Figure 3a is a block diagram illustrating the automated video communication tool for XV-Z10000-to-computer transfer;
Figure 3b is a block diagram illustrating the automated video communication tool for computer-to-XV-Z10000 transfer;
Figure 4 illustrates a state diagram for a state machine and control logic unit within the automated video communication tool;
Figure 5 illustrates a "virtual control panel" created by using the automated video communication tool; and
Figure 6 illustrates a virtual control apparatus embodying the invention for automating video editing communication.

In the following description, numerous specific details are set forth, such as specific components, etc., in order to provide a thorough understanding of apparatus embodying the invention. However, it will be obvious to one skilled in the art that the invention may be practised without the specific details. In other instances, well-known circuits have not been described in detail in order not to obscure the invention. Particularly, although the following description is based on a video mixer like Sony's XV-Z10000, it will be appreciated by those skilled in the art that other video mixers are also available for the intended purposes once the communication protocol between the interface and the mixer is specified. For the sake of simplicity, a communication protocol known as "3-point serial" is described below. However, it will be apparent to those skilled in the art that other protocols may be customised to be compatible with desired edit systems and computers.

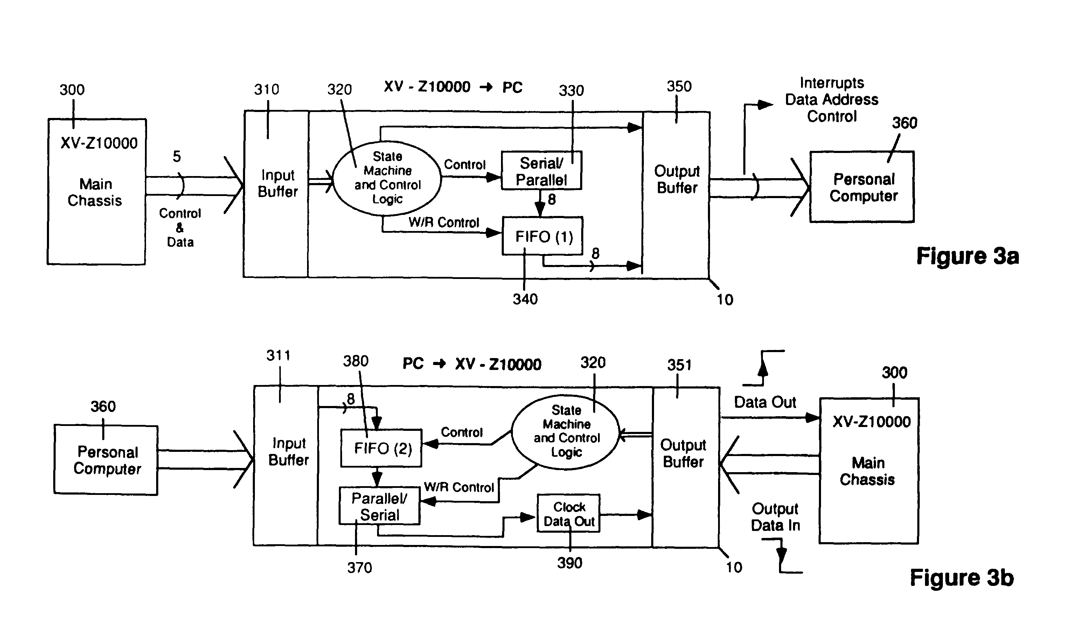

Figure 3(a) is a schematic block diagram of an automated video communication apparatus or tool ("communication tool") 10 embodying the invention for XV-Z10000-to-computer transfer. This computer (shown at 360) can be any of a variety of personal computers of various sizes and capabilities. Control and data signals from the main chassis 300 of the XV-Z10000 enter the communication tool 10 through an input buffer 310. After the control signals BEGIN and INT described above with reference to Figure 2 are detected by a state machine and control logic unit 320, the data signals are converted into parallel data at a serial/parallel converter 330. The parallel data are transferred into a first-in, first-out memory (FIFO) 340 upon the detection of another INT control signal by the state machine and control logic unit 320. The FIFO 340 holds the data until all the data from within a complete frame are in the FIFO 340, i.e. until when the end of a FRAME is detected. Data are then transferred from the FIFO 340 to an output buffer 350. An interrupt to the computer 360 is currently externally generated by the communication tool 10 through the state machine and control logic unit 320 for the computer to service at the next round of communication. When the communication to the computer 360 is open, data signals in the output buffer 350 are transferred to the computer 360.

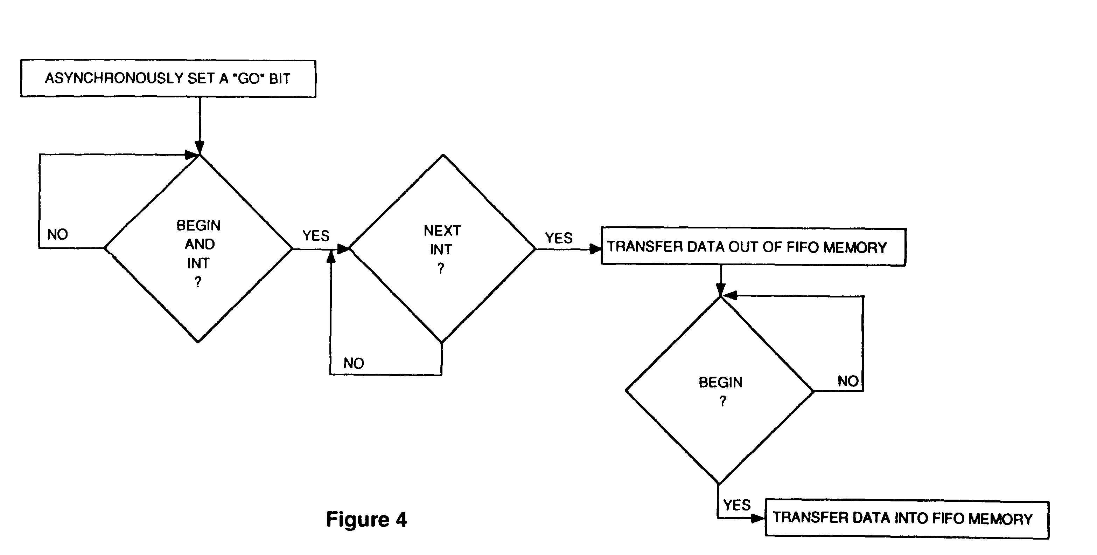

Figure 4 shows a state diagram for the state machine and control logic unit 320. Asynchronously setting a "GO" bit in the address allows the computer 360 to gain control of the XV-Z10000 unit 300. As can be seen from the state diagram, the communication tool 10 is initialised by detecting a BEGIN and a first INT in the incoming signals. Data are transferred out of the write memory for each INT detected (each INT represents a complete byte). When another BEGIN is detected, the data are transferred into a read memory for the target recipient to read.

Figure 3(b) is a schematic block diagram for the communication tool 10 for computer-to-XV-Z10000 transfer. Parallel data are first transferred to an input buffer 311 from the computer 360. When the control signals are sent by the state machine 320, data are transferred into a FIFO 380. Data in the FIFO 380 are converted into serial format by a parallel/serial converter 370 upon a control signal from the state machine and control logic unit 320 and clocked to an output buffer 351 by a clock unit 390. Serial data are transferred to the XV-Z10000's main chassis 300 on the rising edge of the clock, while output data are transferred to the computer 360 on the falling edge of the clock.

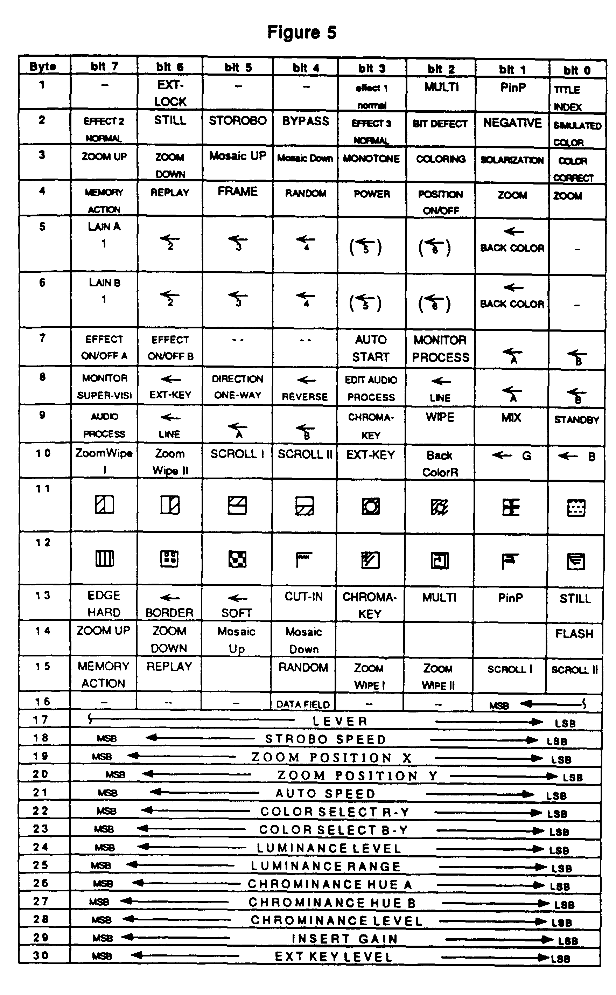

Figure 5 illustrates the data format created by formatting means of the system using the video communication tool 10. As can be appreciated, all bits of a virtual control panel can be set in one frame, which consists of 32 8-bit INTs (bytes). The user of the system selects via the computer 360 the editing functions to be executed by the video mixer. The formatting means, such as the CPU of the computer 360, formats the functions selected into the data format for transmission via the video communication tool for execution by the mixer in a single frame. As an illustrative example of the automated video communication tool, assume that the following edit functions are to be performed on the switcher head by an operator for one frame:
Zoom up - Mosaic down - Zoom wipe - Scroll 1 - Mix.

As these functions are executed on the immediate video sources, the functions are also converted into parallel data format one byte at a time and transferred to an external computer in binary format according to the virtual control panel of Figure 5. Thus, assuming a "1" indicates that the key is activated on the 8-by-32 data array:
- Byte 3:: 1001 0000 (Zoom and Mosaic down)
- Byte 15:: 0000 1010 (Wipe and Scroll 1)
- Byte 9:: 0000 0010 (Mix)

All other bytes of the 32 byte array are inactive ("0")

It can readily be appreciated that the data transferred to the computer can be stored and retrieved for later use for a different frame or a different video mixer. As long as the "3-point serial" protocol is established among the communication tool, the virtual control panel, and the target video mixer, data can be readily downloaded to a different mixer from the computer through the communication tool. It will be understood that those skilled in the art can readily provide necessary items of software interacting between the computer and the communication tool to create the virtual control panel. All functions on this virtual control panel can be executed in one frame, which is less than one second using the current timing scheme, if all bits in the 32 bytes are set to 1. Without the automated communication tool and the virtual control panel, the switcher head must execute functions in a sequential method during the interval of several frames. With the aid of the computer, precise editing of frames can be achieved by programming the computer to edit a picture on a frame-by frame or multiple-frame basis. The computer also helps in developing edit decision lists to conform to a previously drafted edit decision list precisely, thus achieving effects beyond the capabilities of the previous manual switcher head control. In addition, edit decisions can be made first on a computer and then downloaded to the main chassis of a video mixer, thus achieving higher productivity for any given mixer.

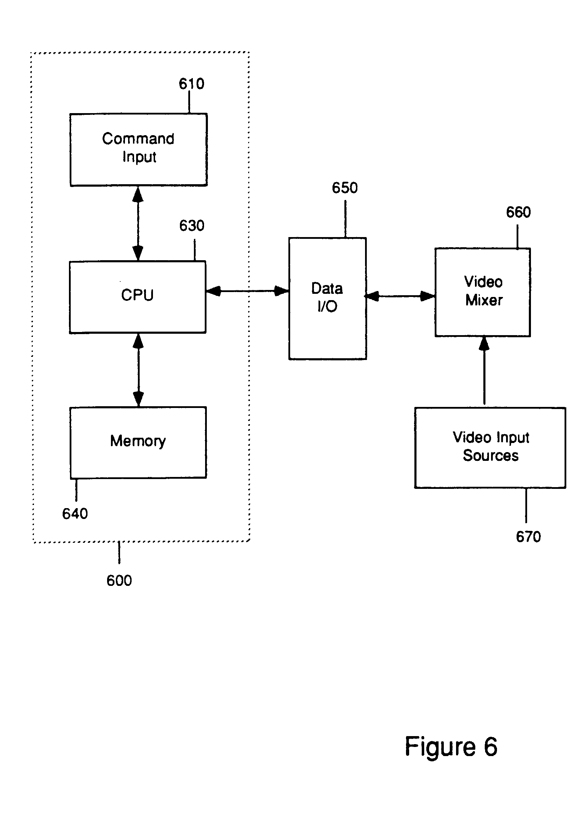

Figure 6 is a schematic block diagram of a virtual control apparatus embodying the invention. In one aspect of its operation, edit command inputs are entered through a command input means 610, which can be a computer keyboard, a touch-sensitive screen, or a screen display with a cursor control device such as a "mouse". A CPU 630, acting as a formatting means, formats the data according to the dictates of a software program, which can be readily designed and implemented by those skilled in the art. After the data is formatted by the CPU 630, the resulting data can either be stored in a memory 640 for later use, or outputted to a data input/output (I/O) means 650 for use by a video mixer 660. The data I/O means 650 transfers the CPU-produced data from the CPU 630 to the video mixer 660, which manipulates video input sources 670 to create the desired effects.

In another aspect of operation, the video mixer 660 operates to manipulate the video input sources 670. The same data and control signals are transferred to the CPU 630 through the data I/O means 650, which converts the data and control signals into proper format for the CPU 630. As described in the foregoing description, the data I/O means 650 may comprise an automated video communication tool such that serial data and control signals are converted into parallel signals for the CPU 630. The CPU 630 can, in turn, store the data and control signals in its memory 640 for subsequent downloading. As indicated by a schematic block in Figure 6, the command input means 610, the CPU 630 and memory 640 can be contained in a computer unit 600 and the data I/O means 650 can be an interface board between the computer 600 and the video mixer 660.

Another conceptual representation is shown in Figure 1c, where the XV-Z10000's control environment when incorporating a virtual control apparatus embodying the invention is shown. A communication tool 150 interfaces between a computer 600 and the main chassis 300 of the XV-Z10000. The switcher head 110 of the XV-Z10000 can control the main chassis 300 to manipulate the video inputs 120. The main chassis 300 can also be solely connected to the computer 600 such that the computer can control the main chassis 300 to manipulate the video inputs 120 as a remote control. As can be observed in Figure 1c, the computer 600 can enhance the capability of the main chassis 300 by replacing the microcomputer 101 of the original arrangement as shown in Figure 1b, as well as the manually-operated switcher head 110.

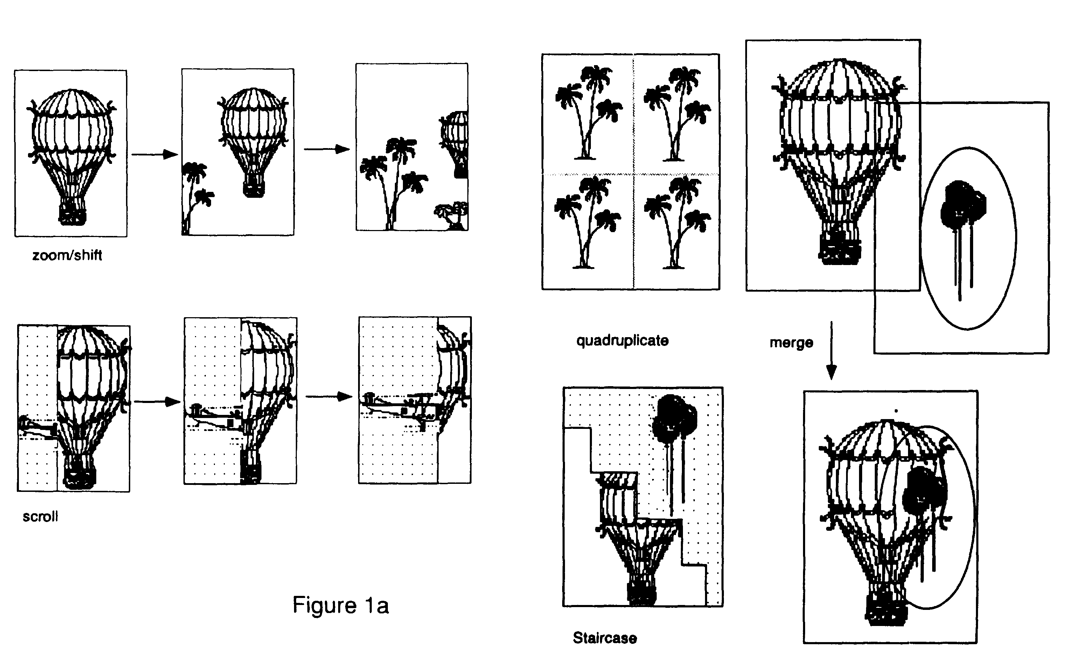

Furthermore, as shown in Figure 1c, a switchable connector 199 can be implemented between the switcher head 110 and the main chassis 300. This switchable connector can be a plurality of single throw double pole switches, which can be controlled by the computer 600 or manually operated, such that one position will allow the commands from the computer 600 to be reflected on the buttons of the switcher head 110 (visual feedback) and another position of the switchable connector 199 will disable the switcher head 110 such that the computer 600 communicates with the main chassis 300 directly with the computer 600 providing visual feedback of the command inputs. A cable incorporating the switchable connector 199 has the pinouts illustrated in Figure 2, where SI and SO represent "serial-in" and "serial-out", respectively. Additional switches in the switchable connector 199 can be utilised to direct the data flow between devices to external leads which may be easily connected to diagnostic equipment.

Thus, for example, a first switch of the switchable connector 119 can enable the serial line to switcher head 110 to receive input from the computer 600 and main chassis 300 such that the switcher head 110 can provide visible feedback in response to operations performed by the computer 600 at the main chassis 300. Alternatively, the reverse effect can be achieved by disabling the serial-out line to the switcher head 110 and enabling the serial-in line to permit user input through the switcher head 110 and visual feedback at the computer 600. The switchable connector 199 may also be used to permit the user to switch between input devices when desirable to achieve different results. For example, a first user may remotely execute a stored sequence of editing commands through the computer 600 followed by a second user executing a series of manual edit commands which the user desires to execute through the switcher head 110. Alternatively, a remote user at the computer 600 and a local user at the switcher head 110 may jointly perform edits by switching between the switcher head 110 and computer 600.

There is further provided a data protection mechanism to avoid the loss of data or transmission of incorrect data due to switching between the switcher head 110 and the computer 600. At the end of each frame, an interrupt is generated by the communication tool 150 to the computer 600. The computer 600 responds to the interrupt by reading the status on the state machine in the communication tool 150 and outputting data to the communication tool (such as editing commands to be performed). Thus, when control of input is changed from the computer to the switcher head, the computer will complete its output of frame data and wait until control of input is changed back to the computer. Because the interrupt is not generated and hence not acted upon until the end of a frame, no data transmission loss occurs when the switch gives control of data flow from the computer 600 to the switcher head 110. When control of input is changed back to the computer, and an interrupt is generated at the end of a frame, the computer, upon receipt of the interrupt, will read the status and initiate transmission of input data. Currently, the computer 600 echoes back the edit commands as a default mode until modified by the user. Thus, overlap of input data by the switcher head and computer and data loss are avoided.

## Claims

1. Editing Apparatus comprising: a video mixer (300), a plurality of video input sources (670,120) coupled to said video mixer, said video mixer performing edit operations on the plurality of video input sources (670,120) pursuant to edit commands received, said video mixer issuing video mixer control signals indicative of timing of signals of video input sources coupled to the video mixer; a communication means (150,650,10); and a computing means (600, 360); the communication means coupling the computing means and the video mixer to each other; characterised by
the computing means (600,360) having means (610) for entering edit commands to be performed, means (640) for storing entered edit commands as an output data array until the commands are to be executed, said output data array comprising a plurality of output data words defining a plurality of edit commands, and means for transmitting a frame consisting of the plurality of output data words to the communication means (150, 650, 10), when the entered edit commands are to be performed
A) the communication means comprising -
i) means (311,320,380) for receiving said data array from said computing means (600, 360) and for receiving video mixer control signals from said video mixer (300), said control signals comprising BEGIN signals, INTERVAL signals and CLOCK signals, each of said BEGIN signals triggering a frame of output data words, each word being synchronised with one INTERVAL signal and said CLOCK signals synchronising each bit of said output data words,
ii) means (370) for converting each output data word of the output data array received by said receiving means (311,320,380) into serial output data signals, one of said output data words being converted if one of said INTERVAL signals is received after one of said INTERVAL signals is synchronously received with one of said BEGIN signals, and
iii) means (390,351) for transmitting said serial output data signals to said video mixer (300) said serial output data signals being synchronous with the rising edges of said CLOCK signals, and
B) the communication means comprising-
iv) means (310,320) for receiving serial input data signals from said video mixer (300), said serial input data signals being synchronous with the falling edges of said CLOCK signals,
v) converter means (330) for converting said input data signals into input data words, one of said input data words being generated when one of said INTERVAL signals is received after one of said INTERVAL signals is synchronously received with one of said BEGIN signals,
vi) means (340) for storing said input data words as an input data array; and
vii) means (350) for transferring said input data array from said storing means (340) to said computing means (360) when one of said BEGIN signals is received after one of said INTERVAL signals is synchronously received with one of said BEGIN signals.

2. Apparatus according to claim 1 wherein the said means ( 311,320, 380) for receiving the data array from the computing means (360) comprises
a buffer means (311) for receiving the data array from the computing means (360),
a FIFO buffer (380) for receiving from the buffer means (311) the plurality of data words of the data array , the converting means (370) converting the contents of the data array located in the FIFO buffer to serial data for output, and
control logic means (320) responsive to control signals received from said video mixer (300), said control logic means (320) being coupled to the FIFO buffer (380) and the converting means (370) for controlling the conversion and output of the data array as serial output data signals for transmission to said video mixer.

3. Apparatus according to claim 1 or 2, wherein: said means (310.320) for receiving the serial input data signals from the video mixer (300) comprises buffer means (310) coupled to receive said serial input data signals from said video mixer (300) and control logic means (320) responsive to said video mixer control signals, and coupled to the said converter means(330) , the storing means (340) and the transferring means (350) for controlling the conversion and transfer of the serial data to the computing means in response to the video mixer control signals;
said converter means (330) is a serial/parallel converter coupled to receive said serial input data signals from said buffer means (310);
said storing means (340) comprises a FIFO buffer (340) for receiving said data word from said serial/parallel converter (330) and storing said data word in a "first-in, first-out" sequence; and
said transferring means (350) transfers said data array from said FIFO buffer to said computer means.

4. A method for performing edit operations on a video mixer (300) said video mixer performing edit operations on a plurality of video input sources (120) coupled to said video mixer pursuant to edit commands received, said video mixer issuing video mixer control signals indicative of timing of signals of video input sources coupled to the video mixer, said method characterised by comprising the steps of:
entering through a computing means (600, 360) edit commands to be performed;
storing entered edit commands as an output data array until the commands are to be executed said output data array comprising a frame consisting of a plurality of output data words defining a plurality of edit commands;
when the entered edit commands are to be performed, transmitting the output data array to a communication means (150, 650, 10) coupled to the video mixer and computing means;
A) the communication means -
i) receiving said data array from said computing means (600, 360) and receiving video mixer control signals from said video mixer (300), said control signals comprising BEGIN signals, INTERVAL signals and CLOCK signals, each of said BEGIN signals triggering a frame of output data words in said video mixer, each word being synchronised with one INTERVAL signal and said CLOCK signals synchronise each bit of said output data array,
ii) converting (380) each output data word of the output data array received from said computing means (360) into serial output data signals, such that one of said output data words is converted if one of said INTERVAL signals is received after one of said INTERVAL signals is synchronously received with one of said BEGIN signals, and
iii) transmitting said serial output data signals to said video mixer (300) said serial output data signals being synchronous with the rising edge of said CLOCK signals, and
B) the communication means-
iv) receiving serial input data signals from said video mixer, said serial input data signals being synchronous with the falling edge of said CLOCK signals,
v) converting (340) said input data signals into input data words, one of said input data words being generated when one of said INTERVAL signals is received after one of said INTERVAL signals is synchronously received with one of said BEGIN signals,
vi) storing said input data words as an input data array; and
vii) transferring said input data array from said communication means (10) to said computing means (360) when one of said BEGIN signals is received after one of said INTERVAL signals is synchronously received with one of said BEGIN signals.

5. The method as set forth in claim 4, wherein said step of transmitting the output data array from the computing means (360) to the communication means (10) comprises transmitting the output data array to the computing means (360) in parallel, and said step of transferring said input data array from said communication means(10) to said computing means transfers the input data array to the computing means in parallel.

6. The method as set forth in claim 4 or 5, wherein said serial input data signals comprise edit commands performed by the video mixer, said method further comprising the steps of:
said computing means (360) receiving said input data array; and
providing feedback as to the edit commands performed.

7. The method as set forth in claim 4,5 or 6 wherein said serial input data signals comprise edit commands, performed by the video mixer, said method further comprising the steps of:
said computing means (360) receiving said input data array; and
storing said received input data array; and
transmitting said stored input data array through the communication means (10) to a second video mixer;
said second video mixer performing the edit operations corresponding to the edit commands located in the stored input data array.

## Patentansprüche

1. Editiergerät, welches umfaßt;
einen Videomischer (300), mehrere Videoeingangsquellen (670, 120), die mit dem Videomischer gekoppelt sind, wobei der Videomischer Editieroperationen für mehrere Videoeingangsquellen (670, 120) gemäß empfangenen Editierbefehlen durchfuhrt, der Videomischer Videomischer-Steuersignale ausgibt, die den Zeitverlauf von Signalen von Videoeingangsquellen, die mit dem Videomischer gekoppelt sind, anzeigen; eine Kommunikationseinrichtung (150, 650, 10); und eine Berechnungseinrichtung (600, 360); wobei die Kommunikationseinrichtung die Berechnungseinrichtung und den Videomischer miteinander koppelt; gekennzeichnet durch
die Berechnungseinrichtung (600, 360), die eine Einrichtung (610) hat, um Editierbefehle, die durchzuführen sind, einzugeben, eine Einrichtung (640), um eingegebene Editierbefehle als Ausgangsdatenfeld zu speichern, bis die Befehle auszuführen sind, wobei das Ausgangsdatenfeld mehrere Ausgangsdatenwörter umfaßt, die mehrere Editierbefehle definieren, und eine Einrichtung zum Übertragen eines Rahmens, der aus mehreren Ausgangsdatenwörtern besteht, zur Kommunikationseinrichtung (150, 650, 10), wenn die eingegebenen Editierbefehle durchzuführen sind
A) wobei die Kommunikationseinrichtung umfaßt:
i) eine Einrichtung (311, 320, 380) zum Empfang des Datenfelds von der Berechnungseinrichtung (600, 360) und zum Empfang von Videomischer-Steuersignalen vom Videomischer (300), wobei die Steuersignale BEGIN-Signale, INTERVAL-Signale und CLOCK-Signale umfassen, wobei jedes der BEGIN-Signale einen Rahmen der Ausgangsdatenwörter triggert, wobei jedes Wort mit einem INTERVAL-Signal synchronisiert ist und wobei die CLOCK-Signale jedes Bit der Ausgangsdatenwörter synchronisieren,
ii) eine Einrichtung (370) zum Umsetzen eines jeden Ausgangsdatenworts des Ausgangsdatenfelds, welches durch die Empfangseinrichtung (311, 320, 380) empfangen wurde, in serielle Ausgangsdatensignale, wobei eines der Ausgangsdatenwörter umgesetzt wird, wenn eines der INTERVAL-Signale empfangen wird, nachdem eines der INTERVAL-signale synchron mit einem der BEGIN-Signale empfangen wird, und
iii) eine Einrichtung (390, 351) zum Übertragen der seriellen Ausgangsdatensignale zum Videomischer (300), wobei die seriellen Ausgangsdatensignale synchron mit den ansteigenden Flanken der CLOCK-Signale sind, und
B) die Kommunikationseinrichtung umfaßt:
iv) eine Einrichtung (310, 320) zum Empfang von seriellen Eingangsdatensignalen vom Videomischer (300), wobei die seriellen Eingangsdatensignale synchron mit den abfallenden Flanken der CLOCK-Signale sind,
v) einen Umsetzer (330) zum Umsetzen der Eingangsdatensignale in Eingangsdatenwörter, wobei eines der Eingangsdatenwörter erzeugt wird, wenn eines der INTERVAL-Signale empfangen wird, nachdem eines der INTERVAL-Signale synchron mit einem der BEGIN-Signale empfangen ist,
vi) eine Einrichtung (340) zum Speichern der Eingangsdatenwörter als Eingangsdatenfeld; und
vii) eine Einrichtung (350) zum Übertragen des Eingangsdatenfelds vom Speicher (340) zur Berechnungseinrichtung (360), wenn eines der BEGIN-Signale empfangen ist, nachdem eines der INTERVAL-Signale synchron mit einem der BEGIN-Signale empfangen ist.

2. Gerät nach Anspruch 1, wobei die Einrichtung (311, 320, 380) zum Empfang des Datenfelds von der Berechnungseinrichtung (360) umfaßt:
einen Pufferspeicher (311) zum Empfang des Datenfeldes von der Berechnungseinrichtung (360),
einen FIFO-Pufferspeicher (380) zum Empfang der mehreren Datenwörter des Datenfelds vom Pufferspeicher (311), wobei die Umsetzungseinrichtung (370) den Inhalt des Datenfelds, das im FIFO-Pufferspeicher ermittelt wurde, in serielle Daten zur Ausgabe umsetzt, und
eine Steuerlogikeinrichtung (320), die auf Steuersignale anspricht, die vom Videomischer (300) empfangen werden, wobei die Steuerlogikeinrichtung (320) mit dem FIFO-Pufferspeicher (380) und der Umsetzungseinrichtung (370) gekoppelt ist, um die Umsetzung und die Ausgabe des Datenfelds als serielle Ausgangsdatensignale für die Übertragung zum Videomischer zu steuern.

3. Gerät nach Anspruch 1 oder 2 wobei: die Einrichtung (310, 320) zum Empfang der seriellen Eingangsdatensignale vom Videomischer (300) einen Pufferspeicher (310), der geschaltet ist, um die seriellen Eingangsdatensignale vom Videomischer (300) zu empfangen, und eine Steuerlogikeinrichtung (320) umfaßt, die auf die Videomischer-Steuersignale anspricht, und die mit dem Umsetzer (330), der Speichereinrichtung (340) und der Übertragungseinrichtung (350) gekoppelt sind, um die Umsetzung und die Übertragung der seriellen Daten zur Berechnungseinrichtung als Antwort auf die Videomischer-Steuersignale zu steuern;
wobei der Umsetzer (330) ein Seriell-Parallel-Umsetzer ist, der geschaltet ist, um die seriellen Eingangsdatensignale vom Pufferspeicher (310) zu empfangen;
die Speichereinrichtung (340) einen FIFO-Pufferspeicher (340) umfaßt, um das Datenwort von dem Seriell-Parallel-Umsetzer (330) zu empfangen und das Datenwort in einer "FIFO"-Folge zu speichern; und
wobei die Übertragungseinrichtung (350) das Datenfeld vom FIFO-Pufferspeicher zur Berechnungseinrichtung überträgt.

4. Verfahren zur Durchführung von Editieroperationen für einen Videomischer (300), wobei der Videomischer Editieroperationen bezüglich mehrerer Videoeingangsquellen (120), die mit dem Videomischer gekoppelt sind, gemäß empfangener Befehle durchführt, wobei der Videomischer Videomischer-Steuersignale ausgibt, die den Zeitverlauf von Signalen von Videoeingangsquellen, die mit dem Videomischer gekoppelt sind, zeigen, wobei das Verfahren durch folgende Schritte gekennzeichnet ist:
Eingeben von durchzuführenden Editierbefehlen über eine Berechnungseinrichtung (600, 360);
Speichern von eingegebenen Editierbefehlen als Ausgangsdatenfeld, bis die Befehle durchzuführen sind, wobei das Ausgangsdatenfeld einen Rahmen umfaßt, der aus mehreren Ausgangsdatenwörtern besteht, die mehrere Editierbefehle definieren;
wenn die eingegebenen Editierbefehle auszuführen sind, Übertragen des Ausgangsdatenfelds zu einer Kommunikationseinrichtung (150, 650, 10), die mit dem Videomischer und der Berechnungseinrichtung gekoppelt ist;
A) wobei die Kommunikationseinrichtung
i) das Datenfeld von der Berechnungseinrichtung (600, 360) und die Videomischer-Steuersignale vom Videomischer (300) empfängt, wobei die Steuersignale BEGIN-Signale, INTERVAL-Signale und CLOCK-Signale umfassen, wobei ein jedes der BEGIN-Signale einen Rahmen von Ausgangsdatenwörtern im Videomischer triggert, wobei jedes Wort mit einem INTERVAL-Signal synchronisiert ist und die CLOCK-Signale jedes Bit des Ausgangsdatenfelds synchronisieren,
ii) jedes Ausgangsdatenwort des Ausgangsdatenfelds, welches von der Berechnungseinrichtung (360) empfangen wurde, in serielle Ausgangsdatensignale umsetzt (380), so daß eines der Ausgangsdatenwörter umgesetzt wird, wenn eines der INTERVAL-Signale empfangen wird, nachdem eines der INTERVAL-Signale synchron mit einem der BEGIN-Signale empfangen wurde, und
iii) die seriellen Ausgangsdatensignale zum Videomischer (300) überträgt, wobei die seriellen Ausgangsdatensignale synchron mit der ansteigenden Flanke der CLOCK-Signale sind, und
B) wobei die Kommunikationseinrichtung
iv) serielle Eingangsdatensignale vom Videomischer (300) empfängt, wobei die seriellen Eingangsdatensignale synchron mit der abfallenden Flanke der CLOCK-Signale sind,
v) die Eingangsdatensignale in Eingangsdatenwörter umsetzt (340), wobei eines der Eingangsdatenwörter erzeugt wird, wenn eines der INTERVAL-Signale empfangen wird, nachdem eines der INTERVAL-Signale synchron mit einem der BEGIN-Signale empfangen wird,
vi) die Eingangsdatenwörter als Eingangsdatenfeld speichert; und
vii) das Eingangsdatenfeld von der Kommunikationseinrichtung (10) zur Berechnungseinrichtung (360) überträgt, wenn eines der BEGIN-Signale empfangen wird, nachdem eines der INTERVAL-Signale synchron mit einem der BEGIN-Signale empfangen wird.

5. Verfahren nach Anspruch 4, wobei der Übertragungsschritt des Ausgangsdatenfelds von der Berechnungseinrichtung (360) zur Kommunikationseinrichtung (10) die parallele Übertragung des Ausgangsdatenfelds zur Berechnungseinrichtung (360) umfaßt, und der Übertragungsschritt des Eingangsdatenfelds von der Kommunikationseinrichtung (10) zur Berechnungseinrichtung das Eingangsdatenfeld zur Berechnungseinrichtung parallel überträgt.

6. Verfahren nach Anspruch 4 oder 5, wobei die seriellen Eingangsdatensignale Editierbefehle umfassen, die durch den Videomischer durchgeführt werden, wobei das Verfahren außerdem folgende Schritte umfaßt:
die Berechnungseinrichtung (360) empfängt das Eingangsdatenfeld; und
Liefern einer Rückführung für die durchzuführenden Editierbefehle.

7. Verfahren nach Anspruch 4, 5 oder 6, wobei die seriellen Eingangsdatensignale Editierbefehle umfassen, die durch den Videomischer durchgeführt werden, wobei das Verfahren außerdem folgende Schritte umfaßt:
die Berechnungseinrichtung (360) empfängt das Eingangsdatenfeld; und
Speichern des empfangenen Eingangsdatenfelds; und
Übertragen des gespeicherten Eingangsdatenfelds über die Kommunikationseinrichtung (10) zu einem zweiten Videomischer;
wobei der zweite Videomischer die Editieroperationen durchführt, die den Editierbefehlen entsprechen, die in dem gespeicherten Eingangsdatenfeld ermittelt werden.

## Revendications

1. Dispositif de montage comprenant : un mélangeur vidéo (300), une pluralité de sources d'entrée vidéo (670, 120) reliées audit mélangeur vidéo, ledit mélangeur vidéo exécutant des opérations de montage sur la pluralité des sources d'entrée vidéo (670, 120) se rapportant aux instructions de montage reçues, ledit mélangeur vidéo émettant des signaux de commande de mélangeur vidéo indicatifs du cadencement des signaux des sources d'entrée vidéo reliées au mélangeur vidéo, un moyen de communications (150, 650, 10), et un moyen de calcul (600, 360), le moyen de communications reliant le moyen de calcul et le mélangeur vidéo l'un à l'autre, caractérisé en ce que
le moyen de calcul (600, 360) comporte un moyen (610) destiné à saisir des instructions de montage devant être exécutées, un moyen (640) destiné à mémoriser les instructions de montage saisies sous forme d'un tableau de données de sortie jusqu'à ce que les instructions soient sur le point d'être exécutées, ledit tableau de données de sortie comprenant une pluralité de mots de données de sortie définissant une pluralité d'instructions de montage, et un moyen destiné à transmettre une trame constituée de la pluralité des mots de données de sortie vers le moyen de communications (150, 650, 10), lorsque les instructions de montage saisies doivent être exécutées
A) le moyen de communications comprenant
i) un moyen (311, 320, 380) destiné à recevoir ledit tableau de données depuis ledit moyen de calcul (600, 360 )et destiné à recevoir des signaux de commande de mélangeur vidéo depuis ledit mélangeur vidéo (300), lesdits signaux de commande comprenant des signaux de début BEGIN, des signaux d'intervalle INTERVAL et des signaux d'horloge CLOCK, chacun desdits signaux BEGIN déclenchant une trame de mots de données de sortie, chaque mot étant synchronisé avec un signal INTERVAL et lesdits signaux CLOCK synchronisant chaque bit desdits mots de données de sortie,
ii) un moyen (370) destiné à convertir chaque mot de données de sortie du tableau de données de sortie reçu par ledit moyen de réception (311, 320, 380) en signaux de données de sortie série, l'un desdits mots de données de sortie étant converti si l'un desdits signaux INTERVAL est reçu après que l'un desdits signaux INTERVAL soit reçu de façon synchrone avec l'un desdits signaux BEGIN, et
iii) un moyen (390, 351) destiné à transmettre lesdits signaux de données de sortie série vers ledit mélangeur vidéo (300), lesdits signaux de données de sortie série étant synchrones avec les fronts montants desdits signaux CLOCK, et
B) le moyen de communications comprenant
iv) un moyen (310, 320) destiné à recevoir des signaux de données d'entrée série depuis ledit mélangeur vidéo (300), lesdits signaux de données d'entrée série étant synchrones avec les fronts descendants desdits signaux CLOCK,
v) un moyen de convertisseur (330) destiné à convertir lesdits signaux de données d'entrée en mots de données d'entrée, l'un desdits mots de données d'entrée étant généré lorsque l'un desdits signaux INTERVAL est reçu après que l'un desdits signaux INTERVAL soit reçu de façon synchrone avec l'un desdits signaux BEGIN,
vi) un moyen (340) destiné à mémoriser lesdits mots de données sous forme d'un tableau de données d'entrée, et
vii) un moyen (350) destiné à transférer ledit tableau de données d'entrée depuis ledit moyen de mémorisation (340) vers ledit moyen de calcul (360) lorsque l'un desdits signaux BEGIN est reçu après que l'un desdits signaux INTERVAL soit reçu de façon synchrone avec l'un desdits signaux BEGIN.

2. Dispositif selon la revendication 1, dans lequel lesdits moyens (311, 320, 380) destinés à recevoir le tableau de données depuis le moyen de calcul (360) comprend
un moyen de mémoire tampon (311) destiné à recevoir le tableau de données depuis le moyen de calcul (360), une mémoire tampon de type premier entré, premier sorti (FIFO) (380) destinée à recevoir depuis le moyen de mémoire tampon (311) la pluralité de mots de données du tableau de données, le moyen de conversion (370) convertissant le contenu du tableau de données situé dans la mémoire tampon FIFO en données série en vue d'une sortie, et
un moyen de logique de commande (320) répondant à des signaux de commande reçus depuis ledit mélangeur vidéo (300), ledit moyen de logique de commande (320) étant relié à la mémoire tampon FIFO (380) et au moyen de conversion (370) afin de commander la conversion et la sortie du tableau de données sous forme de signaux de données de sortie série en vue d'une transmission vers ledit mélangeur vidéo.

3. Dispositif selon la revendication 1 ou 2, dans lequel : ledit moyen (310, 320) destiné à recevoir les signaux de données d'entrée série depuis le mélangeur vidéo (300) comprend un moyen de mémoire tampon (310) relié de façon à recevoir lesdits signaux de données d'entrée série depuis ledit mélangeur vidéo (300) et un moyen de logique de commande (320) répondant auxdits signaux de commande de mélangeur vidéo, et relié audit moyen de convertisseur (330), au moyen de mémorisation (340) et au moyen de transfert (350) afin de commander la conversion et le transfert des données série vers le moyen de calcul en réponse aux signaux de commande de mélangeur vidéo,
ledit moyen de convertisseur (330) est un convertisseur série/parallèle relié de façon à recevoir lesdits signaux de données d'entrée série depuis ledit moyen de mémoire tampon (310),
ledit moyen de mémorisation (340) comprend une mémoire tampon FIFO (340) destinée à recevoir ledit mot de données depuis ledit convertisseur série/parallèle (330) et à mémoriser ledit mot de données dans une séquence "premier entré, premier sorti", et
ledit moyen de transfert (350) transfère ledit tableau de données depuis ladite mémoire tampon FIFO vers ledit moyen de calcul.

4. Procédé d'exécution d'opérations de montage sur un mélangeur vidéo (300), ledit mélangeur vidéo exécutant des opérations de montage sur une pluralité de sources d'entrée vidéo (120) reliées audit mélangeur vidéo, se rapportant à des instructions de montage reçues, ledit mélangeur vidéo émettant des signaux de commande de mélangeur vidéo indicatifs du cadencement des signaux des sources d'entrée vidéo reliées au mélangeur vidéo, ledit procédé étant caractérisé en ce qu'il comprend les étapes consistant à :
recevoir en entrée par l'intermédiaire d'un moyen de calcul (600, 360) des instructions de montage devant être exécutées,
mémoriser des instructions de montage reçues en entrée sous forme d'un tableau de données de sortie jusqu'à ce que les instructions soient sur le point d'être exécutées, ledit tableau de données de sortie comprenant une trame constituée d'une pluralité de mots de données de sortie définissant une pluralité d'instructions de montage,
lorsque les instructions de montage reçues en entrée sont sur le point d'être exécutées, transmettre le tableau de données de sortie à un moyen de communications (150, 650, 10) relié au mélangeur vidéo et au moyen de calcul,
A) le moyen de communications
i) recevant ledit tableau de données depuis ledit moyen de calcul (600, 360) et recevant des signaux de commande de mélangeur vidéo depuis ledit mélangeur vidéo (300), lesdits signaux de commande comprenant des signaux BEGIN, des signaux INTERVAL et des signaux CLOCK, chacun desdits signaux BEGIN déclenchant une trame de mots de données de sortie dans ledit mélangeur vidéo, chaque mot étant synchronisé avec un signal INTERVAL et lesdits signaux CLOCK synchronisant chaque bit dudit tableau de données de sortie,
ii) convertissant (380) chaque mot de données de sortie du tableau de données de sortie reçu depuis ledit moyen de calcul (360) en signaux de données de sortie série, de telle sorte que l'un desdits mots de données de sortie soit converti si l'un desdits signaux INTERVAL est reçu après que l'un desdits signaux INTERVAL soit reçu de façon synchrone avec l'un desdits signaux BEGIN, et
iii) transmettant lesdits signaux de données de sortie vers ledit mélangeur vidéo (300), lesdits signaux de données de sortie série étant synchrones avec le front montant desdits signaux CLOCK, et
B) le moyen de communications
iv) recevant des signaux de données d'entrée série depuis ledit mélangeur vidéo, lesdits signaux de données d'entrée série étant synchrones avec le front descendant desdits signaux CLOCK,
v) convertissant (340) lesdits signaux de données d'entrée en mots de données d'entrée, l'un desdits mots de données d'entrée étant généré lorsque l'un desdits signaux INTERVAL est reçu après que l'un desdits signaux INTERVAL soit reçu de façon synchrone avec l'un desdits signaux BEGIN,
vi) mémorisant lesdits mots de données d'entrée sous forme d'un tableau de données d'entrée, et
vii) transférant ledit tableau de données d'entrée depuis ledit moyen de communications (10) vers ledit moyen de calcul (360) lorsque l'un desdits signaux BEGIN est reçu après que l'un desdits signaux INTERVAL soit reçu de façon synchrone avec l'un desdits signaux BEGIN.

5. Procédé selon la revendication 4, dans lequel ladite étape de transmission du tableau de données de sortie depuis le moyen de calcul (360) vers le moyen de communications (10) comprend la transmission du tableau de données de sortie vers le moyen de calcul (360) en parallèle, et ladite étape consistant à transférer ledit tableau de données d'entrée depuis ledit moyen de communications (10) vers ledit moyen de calcul, transfère le tableau de données d'entrée vers le moyen de calcul en parallèle.

6. Procédé selon la revendication 4 ou 5, dans lequel lesdits signaux de données d'entrée série comprennent des instructions de montage exécutées par le mélangeur vidéo, ledit procédé comprenant en outre les étapes consistant à :
recevoir dans ledit moyen de calcul (360) ledit tableau de données d'entrée, et
fournir une contre-réaction en ce qui concerne les instructions de montage exécutées.

7. Procédé selon la revendication 4, 5 ou 6 dans lequel lesdits signaux de données d'entrée série comprennent des instructions de montage, exécutées par le mélangeur vidéo, ledit procédé comprenant en outre les étapes consistant à:
recevoir dans ledit moyen de calcul (360) ledit tableau de données d'entrée, et
mémoriser ledit tableau de données d'entrée reçu, et
transmettre ledit tableau de données d'entrée mémorisé par l'intermédiaire du moyen de communications (10) vers un second mélangeur vidéo,
ledit second mélangeur vidéo exécutant les opérations de montage correspondant aux instructions de montage situées dans ledit tableau de données d'entrée mémorisé.
